# FASCICULE DE BREVET EUROPEEN

(11) **EP 0 636 584 B1**
(45) Date de publication et mention de la délivrance du brevet: **07.04.1999**
(21) Numéro de dépôt: 94401745.8
(22) Date de dépôt: 28.07.1994
(51) Int. Cl.: C03B 5/00, C03B 5/235, C03B 3/00, C03B 5/187, B09B 3/00, C03C 1/00

(54) **Procédé et dispositif de vitrification de résidus solides issus de l'incinération de déchets ménagers et/ou industriels.**
Verfahren und Vorrichtung zum Verglasen von festen Rückständen aus der Verbrennung von Haus- und/oder Industrieabfällen.
Process and apparatus for vitrifying solid residues from the incineration of domestic and/or industrial waste.

(30) Priorité: 30.07.1993 FR 9309456
(43) Date de publication de la demande: 01.02.1995
(73) Titulaire: CONSTRUCTIONS INDUSTRIELLES DE LA MEDITERRANEE- CNIM, F-75008 Paris (FR)
(72) Inventeur: Tabaries, Frank, George, Jacques, F-83000 Toulon (FR); Durand, Jean-Pierre, Aubin, Edmond, F-83500 La Seyne sur Mer (FR)
(74) Mandataire: Durand, Yves Armand Louis

(56) Documents cités:
- EP-A- 0 359 003
- EP-A- 0 418 010
- EP-A- 0 426 054
- EP-A- 0 520 533
- EP-A- 0 596 774
- DE-A- 4 125 169
- US-A- 4 325 724
- US-A- 4 666 490
- US-A- 4 977 837

## Description

L'invention concerne un procédé de vitrification de résidus solides issus de l'incinération de déchets ménagers et/ou industriels. Elle concerne également un dispositif pour la mise en oeuvre de ce procédé. Le produit obtenu par le procédé ou par la mise en oeuvre du dispositif selon la présente invention est également un objet de l'invention.

Le procédé de vitrification classique de résidus solides issus de l'incinération de déchets ménagers et/ou industriels, tel que celui décrit dans EP-A-0 520 533 consiste à porter les résidus à une température élevée afin de réaliser leur fusion, puis, à refroidir rapidement ces résidus pour obtenir un verre.

Lors de cette fusion, il se forme deux liquides non miscibles :
- le liquide constitué des sels : essentiellement NaCl, KCl, CaCl₂, CaSO₄,
- le liquide constitué des oxydes : essentiellement SiO₂, Al₂O₃, CaO, Fe₂O₃.

La température de fusion du mélange constitué des oxydes est très supérieure a celle du mélange constitué des sels.

La température de travail doit être supérieure ou égale à la température de fusion du mélange constitué des oxydes. Ces conditions peuvent provoquer la vaporisation ou la décomposition des sels.

Ces polluants sont alors entraînés dans les effluents gazeux issus de la fusion des résidus solides et doivent faire l'objet d'un traitement particulier.

Comme décrit dans EP-A-359003, les réactions de décomposition et de vaporisation des polluants ont déjà été évitées par l'utilisation d'additifs à très bas point de fusion. Mais, la différence de température entre la température de fusion des additifs entraîne que pour une faible variation de composition donnée du mélange résidus/additif, due en particulier à une variation de la composition des résidus, la variation de température de fusion de ce mélange sera importante.

A nouveau, on devra travailler à une température très supérieure à la température de fusion du mélange résidus/additif et, par conséquent, le piégeage des polluants nocifs pour l'environnement sera à nouveau empêché.

La demande de brevet européen EP-A-0596774 qui est opposable au titre de l'article 54(3) CBE à la présente demande décrit une masse vitreuse, composée d'oxydes, dans laquelle une masse de sels et de métaux lourds peut être piégée sous forme d'inclusions finement dispersées, la masse de sels pouvant aller jusqu'à une masse égale à la masse vitreuse.

Cependant, cette masse vitreuse n'est obtenue ni par le même procédé ni avec le même dispositif que celui de la présente invention.

US-4-666490 décrit un dispositif pour traiter un courant aqueux de déchets radioactifs et non pour traiter des résidus solides comme dans l'invention.

La présente invention a pour but de pallier les inconvénients précédents en proposant un procédé de vitrification des résidus solides issus de l'incinération des déchets ménagers et/ou industriels du type consistant à :
- fondre les résidus solides avec ou sans additif de fusion dans un four de fusion,
- condenser les sels vaporisés et entraînés dans les gaz issus de cette fusion,
- séparer de la phase gazeuse, les sels condensés, par un moyen de séparation,
   caractérisé en ce qu'on mélange dans un malaxeur, situé en aval du four de fusion, les produits issus dudit moyen de séparation avec le liquide en fusion issu du four de fusion.

Selon une caractéristique préférée du procédé de l'invention, on réalise, avant l'étape de filtration, une étape de neutralisation des gaz acides et de condensation-adsorption des métaux lourds gazeux.

Selon une autre caractéristique préférée du procédé de l'invention, de plus, les sels vaporisés et entraînés dans les gaz issus du malaxeur sont également condensés et séparés de la phase gazeuse par le moyen de séparation.

Selon une variante du procédé de l'invention, on ne fond que les résidus solides dans le four de fusion et en ce qu'on n'emploie pas d'additif de fusion.

Selon une variante particulière de l'invention, on emploie un additif qui est mélangé aux résidus solides avant l'étape de fusion dans le four de fusion, la masse sèche de l'additif est constituée d'au moins 60% en poids d'un mélange M₁ d'oxydes de silicium, d'aluminium et de calcium.

Selon une autre variante particulière de l'invention, le mélange M₁ précité comprend entre environ 55% et environ 75% en poids d'oxyde de silicium, entre environ 5% et environ 30% en poids d'oxyde d'aluminium et entre environ 5% et environ 35% en poids d'oxyde de calcium.

Selon encore une autre variante particulière du procédé de l'invention, l'additif est choisi parmi le mâchefer, la pouzzolane, le basalte.

L'invention propose également un dispositif pour la mise en oeuvre du procédé précédemment décrit, ce dispositif étant du type comprenant un silo de stockage et d'alimentation des produits à fondre, un four de fusion, et des moyens de séparation des particules contenues dans la phase gazeuse issue du four de fusion caractérisé en ce qu'entre le four de fusion et lesdits moyens de séparation on interpose un système de trempe, par exemple à l'air, des effluents gazeux issus du four de fusion et en ce qu'il comprend de plus un malaxeur relié d'une part au four de fusion et d'autre part aux moyens de séparation, malaxeur dans lequel sont mélangés le liquide en fusion collecté sous le four de fusion et les particules solides collectées sous les moyens de séparation, ce malaxeur, étant suivi d'un système de trempe, par exemple à l'eau, de ce mélange en fusion.

Selon une variante particulière du dispositif de l'invention, il est prévu, entre le système de trempe et les moyens de séparation, un système de neutralisation des gaz acides par contact avec un réactif alcalin et de condensation-adsorption des métaux lourds.

Selon une autre variante particulière du dispositif de l'invention, le malaxeur comprend de plus une canalisation d'évacuation des gaz formés dans ce malaxeur, cette canalisation étant reliée au moyen de séparation directement ou par l'intermédiaire du système de neutralisation.

Selon encore une autre variante particulière du dispositif de l'invention, il est de plus prévu un deuxième silo de stockage et d'alimentation, en additif de fusion, relié au four de fusion.

L'invention sera mieux comprise et d'autres buts, caractéristiques, détails et avantages de celle-ci apparaîtront plus clairement au cours de la description explicative qui va suivre, faite en référence au dessin unique annexé qui représente un mode particulier de réalisation du dispositif selon l'invention.

Le procédé et le dispositif de la présente invention permettent d'obtenir un mélange liquide M, constitué de deux liquides non miscibles, suffisamment visqueux pour ralentir et/ou éviter la démixtion.

A cet effet, le procédé de vitrification de la présente invention consiste d'abord à chauffer les résidus solides à traiter jusqu'à la fusion puis à les refroidir rapidement afin d'obtenir un verre.

Les résidus solides sont constitués d'une part de sels tels que des chlorures de sodium, de potassium, de calcium, des sulfates tels que des sulfates de calcium et, d'autre part d'oxydes tels que des oxydes de silicium, d'aluminium, de calcium, de sodium ou de potassium et des métaux lourds.

La température de fusion des oxydes est supérieure à la température de fusion des sels, ce qui oblige à travailler à des températures très élevées auxquelles les sels et les métaux lourds se vaporisent et/ou se décomposent et sont entraînés par les effluents gazeux produits lors de la fusion des résidus.

On obtient donc en sortie de four d'une part un mélange M d'au moins deux liquides non miscibles issus du four de fusion, le premier liquide étant constitué des sels fondus non décomposés et/ou vaporisés et le second liquide étant constitué des oxydes et des métaux lourds non décomposés et/ou vaporisés et d'autre part des effluents gazeux contenant des gaz acides tels que l'acide chlorhydrique, l'acide sulfurique, l'acide fluorhydrique et des sels et des métaux lourds vaporisés et/ou décomposés.

Le procédé de la présente invention consiste alors à condenser les sels contenus dans les effluents gazeux issus de la fusion des résidus solides, par exemple par une trempe à l'air, puis à séparer les particules solides ainsi obtenues de la phase gazeuse, par exemple dans un filtre électrostatique ou à manche ou analogue et à mélanger les particules solides, récupérées sous le système de séparation, au mélange M des deux liquides à la sortie du four de fusion, dans un malaxeur, ce malaxeur étant par exemple du genre de ceux utilisés dans l'industrie verrière pour incorporer des produits (colorants, calcin) au verre.

Le liquide constitué des oxydes cède de la chaleur aux produits solides collectés sous le système de séparation, ce qui entraîne leur fusion. La température du mélange obtenu est inférieure à la température du liquide d'oxydes sortant du four. Ce mélange est suffisamment visqueux pour retenir les gouttelettes de sels fondus au sein de la matrice d'oxydes. De plus, l'agitation mécanique favorise la dispersion de ces gouttelettes.

Ce mélange est alors refroidi rapidement, par exemple par une trempe à l'eau, et on obtient ainsi un produit vitrifié solide constitué d'une matrice d'oxydes au sein de laquelle les sels sont piégés.

Un avantage du procédé de l'invention est que le système est auto-régulant : si la température de fusion augmente, les vaporisations et les décompositions augmentent. Et la masse de produits solides réincorporée au liquide d'oxydes sortant du four est plus importante. L'abaissement de température résultant de cette réincorporation est alors plus importante. La température du mélange effectué dans le malaxeur varie donc peu quelle que soit la température de fusion des résidus solides et donc du liquide d'oxydes obtenu en sortie du four de fusion.

Ainsi, il n'est pas utile d'empêcher la vaporisation et la décomposition des sels et des métaux lourds.

En effet, la présence de gaz acides issus de la décomposition des sels du type sulfates de calcium ou chlorures alcalin ou alcalino-terreux dans l'enceinte du four de fusion et la présence de vapeur de métaux lourds difficilement condensables (par exemple des vapeurs de mercure) conduira à installer un système de traitement des gaz issus du four de fusion entre le filtre et le four de fusion. Ce système peut être par exemple, un système de traitement de fumées par voie semi-humide avec ajout de charbon actif pour piéger les vapeurs de métaux lourds. Les produits solides issus de la neutralisation et de l'adsorption sur le charbon actif sont alors mélangés aux sels, condensés lors de la trempe, collectés à la base du système de séparation pour être de la même façon que précédemment mélangés au liquide en fusion issu du four de fusion.

Cependant, la fusion des résidus à traiter peut être réalisée avec l'ajout d'un additif. L'utilisation d'additifs permet de diminuer la température de fusion du mélange d'oxydes donc la température de travail et par voie de conséquence d'éviter et/ou de limiter les réactions de décomposition des sels. Seules les réactions de vaporisation des sels subsistent.

Un additif particulièrement approprié est un additif dont la masse sèche est constituée d'au moins 60% en poids d'un mélange M₁ d'oxydes de silicium, d'aluminium et de calcium.

Ce mélange M₁ comprend entre environ 55% et environ 75% en poids d'oxyde de silicium, entre environ 5% et environ 30% en poids d'oxyde d'aluminium et entre environ 5% et environ 35% en poids d'oxyde de calcium.

Des additifs répondant à ces critères de composition, sont en particulier le mâchefer, la pouzzolane et le basalte.

En effet, avec de tels additifs, le mélange composé des oxydes des résidus solides et de l'additif se situe dans une zone du diagramme de phase ternaire SiO₂-Al₂O₃-CaO à faible pente de liquidus, ce qui permet de traiter le mélange résidus/additif à une température très peu supérieure à la température de fusion de ce même mélange et par là même de limiter encore plus les réactions de décomposition et/ou de vaporisation décrites ci-dessus.

Que l'on réalise la fusion des résidus seuls ou en mélange avec un additif, le produit vitrifié final obtenu pourra contenir une masse des sels polluants, tels que le chlorure de sodium, de potassium et de calcium, les sulfates de calcium ou analogues et les métaux lourds néfastes pour l'environnement, pouvant aller jusqu'à une masse égale à sa propre masse.

En effet, lorsque la fusion des résidus est réalisée avec un additif qui est essentiellement constitué d'oxydes, la proportion de sels dans le produit final est moins importante mais la masse de sels piégés reste la même.

On peut également envisager d'utiliser du verre fondu pour réaliser l'enrobage des résidus.

Le four est alors alimenté avec du verre de récupération et les résidus sont incorporés au verre fondu dans le malaxeur. En dosant convenablement la masse de verre et la masse de cendres introduites dans le malaxeur, on peut régler la température du mélange à la valeur voulue (température de fusion +30°C par exemple). Ce procédé est très souple mais son application est onéreuse du fait de l'augmentation des masses fondues constituées alors de la masse des résidus et de la masse du verre.

Dans les trois variantes du procédé de l'invention décrites ci-dessus, il est prévu une canalisation d'évacuation des gaz, provenant du malaxeur soit directement, soit par l'intermédiaire du système de neutralisation des gaz acides et de condensation-adsorption des métaux lourds, vers le système de séparation des particules solides de la phase gazeuse.

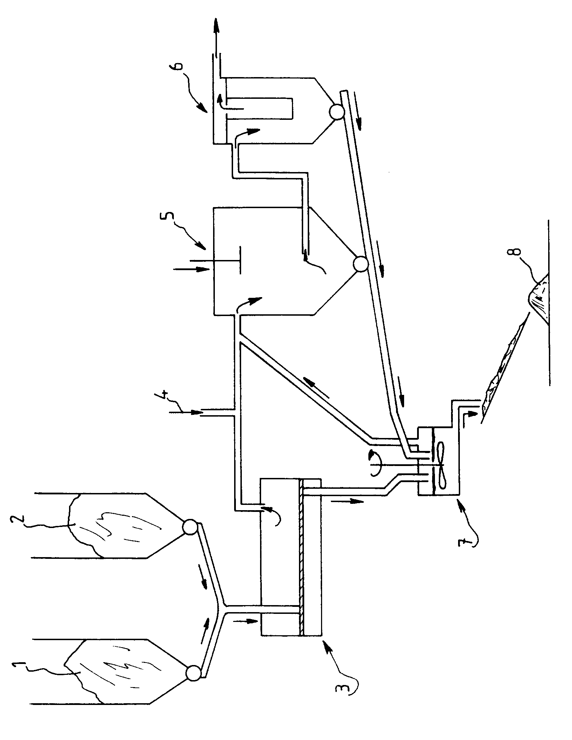

L'invention propose également un dispositif pour la mise en oeuvre du procédé de l'invention dont un mode de réalisation sera maintenant décrit en référence à la figure 1 annexée.

Le dispositif pour la mise en oeuvre du procédé de l'invention comprend un silo 1 de stockage et d'alimentation en produits à traiter d'un four de fusion 3.

Il peut être également prévu un deuxième silo 2 de stockage et d'alimentation en additif du four de fusion 3.

Le four de fusion 3 est relié d'une part à un malaxeur 7 dans lequel s'écoule par exemple par gravité le mélange en fusion obtenu dans le four de fusion 3 et d'autre part à une canalisation d'évacuation des effluents gazeux, cette canalisation menant à un système de condensation 4, par exemple par une trempe à l'air des sels vaporisés et/ou décomposés lors de cette fusion et entraînés par lesdits effluents gazeux.

A la sortie de ce système de condensation 4, les gaz chauds peuvent soit aller directement, soit par l'intermédiaire d'un système 5 de neutralisation des gaz acides et de condensation-adsorption des métaux lourds gazeux par exemple sur du charbon actif, vers un système de séparation 6 de la phase gazeuse des particules solides ainsi obtenues. Ce système de séparation 6 peut être par exemple un filtre électrostatique ou à manche ou analogue.

Lorsque le système de neutralisation est présent, il est particulièrement préféré un système de neutralisation par voie semi-humide avec injection d'une suspension d'un réactif alcalin.

Les effluents gazeux sont à ce stade suffisamment chauds pour vaporiser l'eau de la suspension et la réaction de neutralisation est réalisée avec le réactif alcalin solide. On obtient d'une part des effluents gazeux entraînant les particules solides les plus fines et d'autre part un produit solide que l'on récupère sous le système de neutralisation 5 et que l'on renvoie au malaxeur 7.

De la même façon, on collectera sous le système 6 de séparation les produits solides obtenus que l'on renverra également au malaxeur 7.

Tous ces produits solides sont ensuite mélangés au mélange en fusion issu du four de fusion 3 qui leur cèdera une partie de sa chaleur ce qui permet d'obtenir un mélange M de deux liquides non miscibles suffisamment visqueux pour retenir les gouttelettes de sels fondus au seins du liquide essentiellement constitué d'oxydes provenant du four de fusion.

A la sortie du malaxeur 7, il sera prévu un système de trempe du liquide en fusion, par exemple à l'eau et l'on obtiendra en sortie du dispositif un produit vitrifié 8 solide constitué d'une matrice d'oxydes au sein de laquelle sont piégés, sous forme d'inclusions finement dispersées, les polluants nocifs pour l'environnement Le malaxeur 7 est de plus relié par une canalisation au système 5 de neutralisation ou au système de séparation 6 lorsque le système 5 de neutralisation est absent afin de retraiter les gaz issus de malaxeur 7.

## Revendications

1. Procédé de vitrification de résidus solides issus de l'incinération de déchets ménagers et/ou industriels du type consistant à :
- fondre les résidus solides avec ou sans additif de fusion dans un four de fusion (3),
- condenser les sels vaporisés et entraînés dans les gaz issus de cette fusion,
- séparer de la phase gazeuse, les sels condensés, par un moyen de séparation (6),
caractérisé en ce qu'on mélange dans un malaxeur (7), situé en aval du four de fusion (3), les produits issus dudit moyen de séparation (6) avec le liquide en fusion issu du four de fusion (3).

2. Procédé selon la revendication 1, caractérisé en ce qu'avant l'étape de filtration, on réalise une étape de neutralisation des gaz acides et de condensation-adsorption des métaux lourds gazeux.

3. Procédé selon la revendication 1 ou 2, caractérisé en ce que, de plus, les sels vaporisés et entraînés dans les gaz issus du malaxeur (7) sont également condensés et séparés de la phase gazeuse par le moyen de séparation (6).

4. Procédé selon l'une quelconque des revendications 1 à 3, caractérisé en ce qu'on ne fond que les résidus solides dans le four de fusion (3) et en ce qu'on n'emploie pas d'additif de fusion.

5. Procédé selon l'une quelconque des revendications 1 à 3, caractérisé en ce qu'on emploie un additif de fusion qui est mélangé aux résidus solides avant l'étape de fusion dans le four de fusion (3), cet additif étant alors un additif dont la masse sèche est constituée d'aumoins 60 % en poids d'un mélange M₁ d'oxydes de silicium, d'aluminium et de calcium.

6. Procédé selon la revendication 5, caractérisé en ce que le mélange M₁ précité comprend entre environ 55 % et environ 75 % en poids de SiO₂, entre environ 5 % et environ 30 % en poids d'Al₂O₃ et entre environ 5 % et environ 35 % en poids de CaO.

7. Procédé selon la revendication 5 ou 6, caractérisé en ce que l'additif est choisi parmi le mâchefer, la pouzzolane et le basalte.

8. Dispositif pour la mise en oeuvre d'un procédé de vitrification de résidus solides issus de l'incinération de déchets ménagers et/ou industriels du type comprenant un silo (1) de stockage et d'alimentation des produits à vitrifier, un four de fusion (3) et des moyens de séparation (6) des particules contenues dans la phase gazeuse issue du four de fusion (3) caractérisé en ce qu'entre le four de fusion (3) et lesdits moyens de séparation (6) on interpose un système (4) de trempe, par exemple à l'air, des effluents gazeux issus du four de fusion (3) et en ce qu'il comprend de plus un malaxeur (7) relié d'une part au four de fusion (3) et d'autre part aux moyens de séparation (6), malaxeur (7) dans lequel sont mélangés le liquide en fusion collecté sous le four de fusion (3) et les particules solides collectées sous les moyens de séparation (6), ce malaxeur (7), étant suivi d'un système de trempe, par exemple à l'eau, de ce mélange en fusion.

9. Dispositif selon la revendication 8, caractérisé en ce qu'entre le système (4) de trempe et les moyens de séparation (6), il est prévu un système (5) deneutralisation des gaz acides par un réactif alcalin solide et de condensation-adsorption des métaux lourds.

10. Dispositif selon l'une quelconque des revendications 8 ou 9, caractérisé en ce que le malaxeur (7) comprend de plus une canalisation d'évacuation des gaz formés dans ce malaxeur, cette canalisation étant reliée au moyen de séparation (6) directement ou par l'intermédiaire du système (5) de neutralisation.

11. Dispositif selon l'une quelconque des revendications 8 à 10, caractérisé en ce qu'il est de plus prévu un deuxième silo (2) de stockage et d'alimentation, en additif de fusion, relié au four de fusion (3).

## Claims

1. Method of vitrification of solid residues issued from the incineration of household and/or industrial waste, of the type consisting in:
- melting the solid residues with or without a fusion additive in a melting furnace (3),
- condensing the vaporized salts carried along in the gases issued from this melting,
- separating, from the gaseous phase, the condensed salts by a separation means (6),
characterized in that one mixes in a mixer (7) located downstream of the melting furnace (3), the products issued from the said separation means (6) with the molten liquid issued from the melting furnace (3).

2. Method according to claim 1, characterized in that prior to the filtration step, one carries out a step for the neutralization of the acid gases and for the condensation-adsorption of the heavy gaseous metals.

3. Method according to claim 1 or 2, characterized in that in addition the vaporized salts carried along in the gases issued from the mixer (7) are also condensed and separated from the gaseous phase by the separation means (6).

4. Method according to any one of claims 1 to 3 characterized in that one only melts the solid residues in the melting furnace (3) and in that one uses no fusion additive.

5. Method according to any one of claims 1 to 3, characterized in that one uses a fusion additive which is admixed to the solid residues before the melting step in the melting furnace (3), this additive then being an additive the dry mass of which consists of at least 60 % by weight of a mixture M₁ of silicon oxide, aluminium oxide and calcium oxide.

6. Method according to claim 5, characterized in that the aforesaid mixture M₁ comprises between about 55 % and about 75 % by weight of SiO₂, between about 5 % and about 30 % by weight of Al₂O₃ and between about 5 % and about 35% by weight of CaO.

7. Method according to claim 5 or 6, characterized in that the additive is selected among clinker, pozzolana and basalt.

8. Device for carrying out a method of vitrification of solid residues issued from the incineration of household and/or industrial waste, of the type comprising a silo (1) for the storage and feeding of the products to be vitrified, a melting furnace (3) and means (6) for the separation of the particles contained in the gaseous phase issued from the melting furnace (3), characterized in that between the melting furnace (3) and the said separation means (6), one interposes a system (4) for the quenching, for example with air, of the gaseous effluents issued from the melting furnace (3) and in that it in addition comprises a mixer (7) connected on the one hand to the melting furnace (3) and on the other hand to the separation means (6), in which mixer (7) are mixed the molten liquid collected underneath the melting furnace (3) and the solid particles connected underneath the separation means (6), this mixer (7) being followed by a system for the quenching for example with water of this molten mixture.

9. Device according to claim 8, characterized in that between the quenching system (4) and the separation means (6), there is provided a system (5) for the neutralization of the acid gases by an alcaline solid reagent and for the condensation-adsorption of the heavy metals.

10. Device according to any one of claims 8 or 9, characterized in that the mixer (7) in addition comprises a duct for the discharge of the gases formed in this mixer, this duct being connected to the separation means (6) directly or through the medium of the neutralization system (5).

11. Device according to any one of claims 8 to 10, characterized in that there is in addition provided a second silo (2) for the storage and feeding with fusion additive connected to the melting furnace (3).

## Patentansprüche

1. Verfahren zur Verglasung von sich aus der Verbrennung von Haushalts- und/oder gewerblichen Abfällen ergebenden festen Rückständen, derjenigen Gattung, die darin besteht :
- die festen Rückstände mit oder ohne Schmelzzusatzstoff in einem Schmelzofen (3) zu schmelzen,
- die verdampften und in den aus dieser Schmelzung entstandenen Gasen mitgerissenen Salze zu kondensieren,
- die kondensierten Salze durch ein Trennmittel (6) von der gasförmigen Phase zu trennen,
dadurch gekennzeichnet, daß man die aus dem besagten Trennmittel (6) entstandenen Erzeugnisse mit der aus dem Schmelzofen (3) entstandenen Schmelzflüßigkeit in einem stromabwärts des Schmelzofens (3) gelegenen Mischer (7) vermischt.

2. Verfahren nach Anspruch 1, dadurch gekennzeichnet, daß man vor dem Filtrierungsschritt einen Schritt zur Neutralisierung der saueren Gase und zur Kondensation-Adsorption der gasförmigen schweren Metalle durchführt.

3. Verfahren gemäß Anspruch 1 oder 2, dadurch gekennzeichnet, daß ausserdem die verdampften und in den aus dem Mischer (7) entstandenen Gasen mitgerissenen Salze ebenfalls kondensiert und durch das Trennmittel (6) von der Gasphase abgeschieden werden.

4. Verfahren nach irgendeinem der Ansprüche 1 bis 3, dadurch gekennzeichnet, daß man nur die festen Rückstände in dem Schmelzofen (3) schmelzt und daß man keinen Schmelzzusatzstoff verwendet.

5. Verfahren nach irgendeinem der Ansprüche 1 bis 3, dadurch gekennzeichnet, daß man einen Schmelzzusatzstoff, der mit den festen Rückständen vor dem Schmelzungsschritt in dem Schmelzofen (3) vermischt wird, verwendet, wobei dieser Zusatzstoff dann ein Zusatzstoff, dessen trockene Masse durch wenigstens 60 Gewichtsprozent eines Gemisches M₁ von Silizium-, Aluminium- und Kalziumoxiden gebildet wird, ist.

6. Verfahren nach Anspruch 5, dadurch gekennzeichnet, daß das vorgenannte Gemisch M₁ zwischen ungefähr 55 und 75 Gewichtsprozent SiO₂, zwischen ungefähr 5 und ungefähr 30 Gewichtsprozent Al₂O₃ und zwischen ungefähr 5 und ungefähr 35 Gewichtsprozent von CaO umfaßt.

7. Verfahren gemäß Anspruch 5 oder 6, dadurch gekennzeichnet, daß der Zusatzstoff unter Schlacke, Puzzolanerde und Basalt gewählt wird.

8. Vorrichtung zur Durchführung eines Verfahrens zur Verglasung von aus der Verbrennung von Haushalts-und/oder Industrieabfällen entstandenen festen Rückständen, derjenigen Gattung mit einem Bunker (1) zur Speicherung und Speisung der zu verglasenden Erzeugnisse, einen Schmelzofen (3) und Mitteln (6) zur Abscheidung der in der aus dem Schmelzofen (3) entstandenen Gasphase enthaltenen Teilchen, dadurch gekennzeichnet, daß man zwischen dem Schmelzofen (3) und den besagten Abscheidungsmitteln (6) ein System (4) zum Abschrecken z.B. mit Luft, der aus dem Schmelzofen (3) entstandenen gasförmigen Abgänge zwischenschaltet und daß sie außerdem einen einerseits mit dem Schmelzofen (3) und andererseits mit den Trennmitteln (6) verbundenen Mischer (7) umfaßt, in welchem Mischer (7) die unterhalb des Schmelzofens (3) gesammelte Schmelzflüssigkeit und die unterhalb der Trennmitttel (6) gesammelten Teilchen vermischt werden, wobei diesem Mischer (7) ein System zur Abschreckung z.B. mit Wasser dieses geschmolzenen Gemisches nachgeschaltet ist.

9. Vorrichtung nach Anspruch 8, dadurch gekennzeichnet, daß zwischen dem Abschreckungssystem (4) und den Abscheidungsmitteln (6) ein System (5) zur Neutralisierung der saueren Gase durch ein festes alkalisches Reagenz und zur Kondensierung-Adsorption der schweren Metalle vorgesehen ist.

10. Vorrichtung nach irgendeinem der Ansprüche 8 oder 9, dadurch gekennzeichnet, daß der Mischer (7) außerdem eine Leitung zum Abführen der in diesem Mischer gebildeten Gase aufweist, wobei diese Leitung unmittelbar oder über das Neutralisierungssystem (5) mit dem Trennmittel (6) verbunden ist.

11. Vorrichtung nach irgendeinem der Ansprüche 8 bis 10, dadurch gekennzeichnet, daß außerdem ein mit dem Schmelzofen (3) verbundener zweiter Bunker (2) zur Speicherung und Speisung mit Schmelzzusatzstoff vorgesehen ist.
